# EUROPÄISCHE PATENTSCHRIFT

(11) **EP 2 487 462 B1**
(45) Veröffentlichungstag und Bekanntmachung des Hinweises auf die Patenterteilung: **12.10.2016**
(21) Anmeldenummer: 12155380.4
(22) Anmeldetag: 14.02.2012
(51) Int. Cl.: G01C 21/34

(54) **Automatische Unterstützung der Routenplanung**
Automatic support for route planning
Support automatique pour la planification de routes

(30) Priorität: 14.02.2011 DE 102011011213
(43) Veröffentlichungstag der Anmeldung: 15.08.2012
(73) Patentinhaber: Deutsches Zentrum für Luft- und Raumfahrt e.V., 51147 Köln (DE)
(72) Erfinder: Gollnick, Volker, 21641 Apensen (DE)
(74) Vertreter: Aisch, Sebastian

(56) Entgegenhaltungen:
- EP-A1- 2 378 249
- EP-A2- 0 978 705
- DE-A1- 10 212 997
- DE-C1- 19 636 379
- US-A1- 2009 287 408

## Beschreibung

Die Erfindung betrifft ein Verfahren zur automatischen Unterstützung der Routenplanung zwischen einem Start- und einem Zielpunkt. Die Erfindung betrifft auch ein Computerprogramm sowie eine Vorrichtung hierzu.

Navigationssysteme und Telematikanwendungen, wie sie beispielsweise in Kraftfahrzeugen und sogar schon in mobilen Endgeräten, wie Smartphones zu finden sind, sind in der Lage, eine Verkehrsroute zwischen einem von einem Benutzer gewählten Start- und Endpunkt zu ermitteln. Dabei kann der Benutzer meist wählen, ob die Verkehrsroute hinsichtlich der Zeit, d.h. die schnellste Verbindung oder hinsichtlich der Streckenlänge, d.h. die kürzeste Verbindung, optimiert werden sollen. Je nach Einstellung können sich dabei unferschiedliche Verkehrsrouten für ein und dasselbe Verkehrsmittel ergeben.

Bei Routenermittlungsdiensten, auf die ein Benutzer online zugreifen kann, besteht dabei meist noch die Möglichkeit, in einem begrenzten Umfang die Art der Verkehrsmittel zu wählen, d.h. ob der Benutzer die Strecke mit dem Auto, mit dem Fahrrad oder beispielsweise zu Fuß zurücklegen möchte. Diese Angebote beschränken sich jedoch auf rein privat bzw, individuell verfügbare Verkehrsmittel.

Bei öffentlichen Verkehrsmitteln, die in der Regel fahrplangebunden sind, werden ebenfalls bereits online Dienstleistungen angeboten, mit denen ein Benutzer eine Verkehrsroute von einem Startpunkt zu einem Zielpunkt auswählen kann. Dabei sind die Start- und Zielpunkte festgelegte, diskrete Punkte (beispielsweise Bahnhöfe) und sind somit weniger flexibel als private bzw. individuell nutzbare Verkehrsmittel. Auch hierbei kann der Benutzer meist die Art des öffentlichen Verkehrsmittels wählen, bzw die Art des Zuges (Regionalbahn, ICE), was sich letztendlich in der Tarif- und Preisgestaltung niederschlägt.

Mit dem steigenden Umweltbewusstsein in den westlichen Industrieländern rückt immer mehr die Umweltbelastung unseres Tun und Handelns in den Vordergrund. So ist es beispielsweise allgemein bekannt, dass einige Südfrüchte, die in unseren Supermärkten zu finden sind, eine sehr schlechte CO2-Bilanz aufweisen, da für ihren Transport erhebliche Mengen von fossilen Brennstoffen benötigt werden. Je besser dabei die CO2-Bilanz ist, desto ökologischer und nachhaltiger ist diese Ware, worauf der Verbraucher mehr und mehr zu achten scheint.

Aus der US 2009/0287408 A1 ist ein Navigationssystem bekannt, bei dem der Benutzer eine Reihe von alternativen Routen angezeigt bekommt, die insbesondere öffentliche Verkehrsmittel enthalten sollen. Dabei können Routensegmente der Verkehrsrouten je nach geschätzten Emissionen gewichtet werden, um so die alternativen Routen nach entsprechenden Gewichtungen sortieren zu können.

Aus der EP 2 378 249 A1 ist ebenfalls ein Navigationssystem bekannt, bei dem eine Verkehrsroutenplanung für das eigene Fahrzeug mit Hilfe von Emissionen des eigenen Fahrzeuges ermittelt werden solle.

Aus der DE 196 36 379 C1 ist des Weiteren ein Verfahren zur Steuerung des Transport- und Reiseverkehrs bekannt, bei dem auf Grundlage von gespeicherten allgemeinen Informationen über die Knoten eines Verkehrsnetzes eine optimierte Route zwischen Start und Ziel ermittelt werden soll.

### Aufgabe

Es ist daher Aufgabe der vorliegenden Erfindung ein verbessertes Verfahren anzugeben, bei dem auch die ökologische Seite der Routenplanung Betrachtung findet.

### Lösung

Die Aufgabe wird mit dem Verfahren der eingangs genannten Art gelöst durch:
- Ermitteln für verschiedene Verkehrsmittel jeweils mindestens einer Verkehrsroute zwischen dem Start- und dem Zielpunkt durch eine Verkehrsroutenermittlungseinheit und Zuordnen des mindestens einen Verkehrsmittels zu der jeweiligen Verkehrsroute;
- Ermitteln von Emissionsinformationen durch eine Emissionsermittlungseinheit für jede Verkehrsroute in Abhängigkeit von der ihr zugeordneten Verkehrsmittels und der Verkehrsroutenlänge der jeweiligen Verkehrsroute, und
- Unterstützen der Routenplanung zwischen Start- und Zielpunkt in Abhängigkeit von den Emissionsinformationen.

Demnach wird vorgeschlagen, dass bei der Routenplanung zwischen einem Start- und einem Zielpunkt für verschieden Verkehrsmittel jeweils mindestens eine Verkehrsroute ermittelt wird. Jeder Verkehrsroute wird dann dieses Verkehrsmittel, bezüglich dessen die Verkehrsroute ermittelt wurde, zugeordnet. Aufgrund der Verwendung unterschiedlicher Verkehrsmittel bei der Berechnung der Verkehrsroute ergeben sich somit auch unterschiedlichste Verkehrsrouten, was beispielsweise anhand des Verkehrsmittels Kfz und Bahn schnell ersichtlich wird.

Anschließend wird für jede Verkehrsroute und dieser Verkehrsroute zugeordneten Verkehrsmittel eine Emissionsinformation ermittelt. Eine solche Emissionsinformation kann beispielsweise die Emission von CO2 sein, die ein Verkehrsmittel beim Zurücklegen einer Strecke abgibt, bzw. aufgrund der Bereitstellung von Energie im Vorfeld abgegeben wurde (Stichwort "CO2-Bilanz"). Hinsichtlich der Streckenlänge kann so für jede Verkehrsroute ermittelt werden, wie viel Emissionen das jeweilige, das der Verkehrsroute zugeordnete Verkehrsmittel abgibt bzw. abgegeben hat. Anschließend wird die eigentliche Routenplanung zwischen dem Start- und dem Zielpunkt in Abhängigkeit von diesen Emissionsinformationen unterstützt. So kann beispielsweise einem Benutzer angezeigt werden, welche Verkehrsmittel auf welchen Verkehrsrouten welche Emissionsbelastung erzeugen. Hinsichtlich dessen kann der Benutzer eine für ihn sinnvolle Verkehrsroute wählen, beispielsweise die, die die beste CO2-Bilanz aufweist. Aber auch für Logistikunternehmen, die auf ein ökologisches und nachhaltiges Transportsystem im Güterverkehr achten, ist es sinnvoll festzustellen, welches Güterverkehrsmittel letztendlich für eine Strecke von einem Start- zu einem Zielpunkt ökologisch am sinnvollsten ist. Somit wird ein System zur emissions- und routenorientierten Verkehrsmittelwahl vorgeschlagen.

Als Verkehrsmittel werden im Sinne dieser Erfindung dabei jegliche Arten von Verkehrsmitteln verstanden. Grundsätzlich ist es dabei besonders vorteilhaft, wenn gerade ein Vergleich zwischen privaten bzw. individuellen Verkehrsmitteln und öffentlichen bzw. fahrplangebundenen Verkehrsmitteln hinsichtlich der von den ausgestoßenen Emissionen erfolgt. So kann beispielsweise für einen Reisenden auf längerer Strecke die Emissionsinformation für ein Auto, für die Bahn und das Flugzeug angezeigt werden. Dabei wird als Verkehrsmittel auch ein Fahrrad bzw. letztendlich auch das Zufußgehen verstanden.

Dabei wird die Emissionsinformation einer Verkehrsroute bezüglich eines Verkehrsmittels unter Berücksichtigung von statistischen Durchschnittswerten des Energieverbrauches ermitteln. So ist es beispielsweise bekannt, wie viel Energie beispielsweise ein ICE für eine Strecke von 100 km benötigt. Hieraus kann dann auf die Emission geschlussfolgert werden, die entsteht, um die für den ICE-Zug benötigte Energie bereitzustellen. Dabei lassen sich selbstverständlich auch unterschiedliche Energiebereitstellungsmethoden berücksichtigen, beispielsweise ob die Energie aus regenerativen Energiequellen stammt oder aus Atomenergie.

Des Weiteren ist es ganz besonders vorteilhaft, wenn die Unterstützung der Routenplanung in Abhängigkeit eines Vergleiches der einzelnen Emissionsinformationen der Verkehrsrouten erfolgt, beispielsweise durch eine Routenplanungseinheit. Aus diesem Vergleich kann beispielsweise auch automatisch einem Benutzer die emissionseffizienteste Verkehrsroute angezeigt werden. Somit kann die Routenplanung nicht nur hinsichtlich der Kriterien Zeit und Wegstrecke optimiert werden, sondern auch hinsichtlich der zu erwartenden Emissionen.

Vorteilhafterweise werden die Verkehrsrouten weiterhin unter Berücksichtigung einer vom Benutzer gewünschten Abfahrts- und/oder Ankunftszeit ermittelt.

Des Weiteren ist es ganz besonders vorteilhaft, wenn zu jeder Verkehrsroute und der ihr zugeordneten Verkehrsmittel eine Zeitinformation ermittelt wird, Eine solche Zeitinformation kann beispielsweise die statistische Zeitdauer sein, die das Verkehrsmittel für das Zurücklegen der Strecke benötigt. So kann der Benutzer wählen, ob seine Verkehrsroute hinsichtlich der Zeit oder der Emission optimiert werden soll.

Vorteilhafterweise werden bei der Ermittlung der Zeitinformationen aktuelle Verkehrsinformationen der jeweiligen Verkehrsroute und des jeweiligen Verkehrsmittels berücksichtigt. Darüber hinaus können die Verkehrsinformationen der Verkehrsroute auch Einfluss in die Ermittlung der Emissionsinformationen haben. So erhöht sich beispielsweise die Emissionsabgabe eines Kfzs, wenn dieses über einen längeren Zeitraum im Stau steht bzw. im zäh fließenden Verkehr steckt. Diese Informationen können mit in die Emissionsinformation einfließen und korrigieren dann das Ergebnis meist negativ nach oben.

Ganz besonders vorteilhaft ist es, wenn für fahrplangebundene Verkehrsmittel, beispielsweise öffentliche Verkehrsmittel im Nahverkehr, Züge, Flugzeuge und Schiffe, die Verkehrsrouten in Abhängigkeit eines Fahrplans ermittelt wird, auf den online zugegriffen werden kann. Somit lässt sich das erfindungsgemäße Verfahren auch auf mobilen Online-Geräten einsetzen.

Nicht selten kommt es vor, dass eine Verkehrsroute eine intermodale Verkehrsroute ist. Intermodale Verkehrsrouten sind Verkehrsrouten, bei denen die Wegstrecke mit Hilfe von verschiedenen Verkehrsmitteln bewältigt werden muss. Ein Beispiel hierfür ist eine längere Wegstrecke, die im Flugzeug zurückgelegt werden muss, wobei die eigentliche Verkehrsroute auch den Zugang zum Flughafen sowie den Abgang vom Flughafen zum eigentlichen Zielort umfasst. Bei einer derartigen intermodalen Verkehrsroute besteht die Verkehrsroute somit aus mehreren Teilrouten, für die unterschiedliche Verkehrsmittel benutzt werden müssen.

Bei derartigen intermodalen Verkehrsrouten ist es dabei ganz besonders vorteilhaft, wenn für die verschiedenen Teilrouten Verkehrsmittel zugeordnet werden und in Abhängigkeit dann die Emissionsinformationen ermittelt werden. Die Emissionsinformationen ergeben sich dann aus den Emissionsinformationen der einzelnen Teilrouten. So können beispielsweise für den Zugang zu einem Flughafen unterschiedliche Verkehrsmittel gewählt werden, die letztendlich Einfluss auf die zu erwartenden Emissionsbelastung haben.

Die Aufgabe wird im Übrigen auch mit einem Computerprogramm mit Programmcodemitteln, eingerichtet zur Durchführung des vorstehenden Verfahrens, gelöst, wenn das Computerprogramm auf einer Datenverarbeitungsanlage ausgeführt wird.

Darüber hinaus wird die Aufgabe auch mit einer Vorrichtung zur automatischen Unterstützung der Routenplanung zwischen einem Start- und einem Zielpunkt gelöst, wobei die Vorrichtung eine Verkehrsroutenermittlungseinheit hat, die für verschiedene Verkehrsmittel zur Ermittlung jeweils mindestens einer Verkehrsroute zwischen dem Start- und dem Zielpunkt und zum Zuordnen des mindestens einen Verkehrsmittels zu der jeweiligen Verkehrsroute eingerichtet ist, die Vorrichtung eine Emissionsermittlungseinheit hat, die zum Ermitteln von Emissionsinformationen für ihre Verkehrsroutenabhängigkeit von den ihr zugeordneten Verkehrsmitteln der Verkehrslänge der jeweiligen Verkehrsroute eingerichtet ist, und wobei die Vorrichtung zur Unterstützung der Routenplanung zwischen Start- und Zielpunkt in Abhängigkeit von den Emissionsinformationen eingerichtet ist.

Vorteilhafte Ausgestaltung der Vorrichtung finden sich in den entsprechenden Unteransprüchen.

Die Erfindung wird anhand der beigefügten Zeichnungen beispielhaft näher erläutert.

Es zeigen:
- Fig. 1 -: schematische Darstellung des Ablaufs der vorliegenden Erfindung;
- Fig. 2 -: beispielhafte Routenplanung zwischen einem Start- und einem Zielpunkt

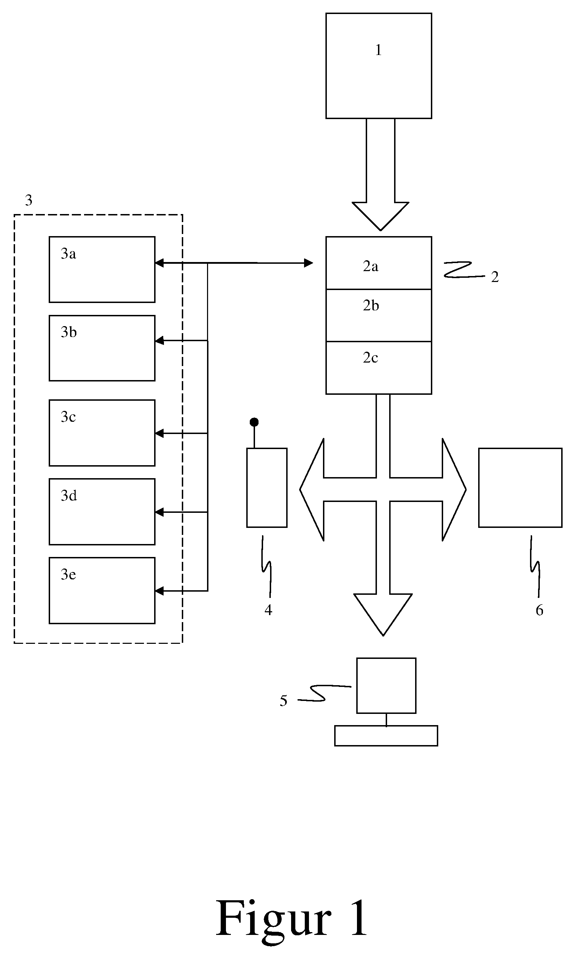

Figur 1 zeigt schematisch den Ablauf des Verfahrens. Zunächst wird die Routenplanung mit der Eingabe der gewünschten Routenparameter in Block 1 gestartet. Zumindest der Start- und der Zielpunkt sind hierfür notwendig. Weitere Parameter können beispielsweise die Ankunfts- bzw. Abfahrtszeit sein sowie weitere, optionale Kriterien wie kürzeste Strecke oder schnellste Verbindung sowie emissionseffizienteste Route.

Anschließend erfolgt die eigentliche Routenplanung in Block 2, der in drei Teilbereiche 2a, 2b und 2c unterteilt ist. Im Teilbereich 2a wird nun zunächst für jedes Verkehrsmittel, das beispielsweise an dem Startpunkt zur Verfügung steht, eine Verkehrsroute von dem Startpunkt zu dem Zielpunkt ermittelt. Hierfür steht der Teilbereich 2a mit einer Vielzahl von Datenbanken oder Online-Dienstleistern in Verbindung, um die Routen zu ermitteln. So können zum einem mit Hilfe einer Flugroutenplanung 3a entsprechende fahrplangebundene Flugrouten zwischen dem Start- und dem Zielpunkt abgefragt bzw. ermittelt werden. Darüber hinaus können Nahverkehrsrouten mit Hilfe von öffentlichen Nahverkehrsmitteln in 3b ermittelt werden. Auch Fernverbindungen mit der Bahn lassen sich durch den Block 3c ermitteln. Des Weiteren lassen sich in 3d aktuelle Verkehrsrouten für Kraftfahrzeuge bzw. Straßenfahrzeuge abrufen und in 3e diesbezügliche Verkehrsinformationen.

Aus diesen Informationen, die sich aus den beispielhaft dargestellten Modulen 3a bis 3e ermitteln lassen, werden nun für die verschiedensten Verkehrsmittel entsprechende Verkehrsrouten von dem Start- zu dem Zielpunkt ermitteln. Dabei kann selbstverständlich eine gewünschte Ankunfts- bzw. Abfahrtszeit mit berücksichtigt werden. Je nach Verkehrsinformationen, beispielsweise Behinderungen oder Verspätungen im Betriebsablauf, können auch Ausweichrouten ermittelt werden, um die Verkehrsbehinderungen zu umgehen. Letztendlich lassen sich für ein Verkehrsmittel somit durchaus unterschiedliche Verkehrsrouten ermitteln.

Im Schritt 2b werden nun für alle in 2a ermittelten Verkehrsrouten die entsprechenden Emissionsinformationen ermittelt. Diese lassen sich durch statistische Durchschnittsverbräuche der einzelnen Verkehrsmittel, anhand derer die Verkehrsroute ermittelt wurde, ermitteln. So lässt sich beispielsweise aus der benötigten Energie, die ein Zug für die Zurücklegung der Strecke verbraucht, ableiten, wie viel Emissionen entstanden sind, um diese Energie bereitzustellen. Dabei können selbstverständlich unterschiedlichste Arten von Energiequellen mit berücksichtigt werden, so dass der Verbraucher im Nahverkehr eine Route wählen kann, die von einem Verkehrsanbieter bedient wird, der auf eine saubere Energie achtet.

Bei Straßenfahrzeugen können darüber hinaus auch unterschiedliche Arten von Straßenfahrzeugen berücksichtigt werden. So verbraucht beispielsweise ein Kleinwagen wesentlich weniger Energie als SUV, so dass sich daraus auch unterschiedliche Emissionsinformationen (beispielsweise CO2-Abgabe) ermitteln lassen.

Wurde nun für jede Verkehrsroute und der ihr zugeordneten Verkehrsmittel eine entsprechende Verkehrsinformation ermittelt, so kann im letzten Schritt 2c nun ein entsprechender Vergleich stattfinden. Lag die Präferenz des Benutzers in einer möglichst ökologischen Verkehrsroute, so wird die Verkehrsroute mit dem Verkehrsmittel gewählt, welche die geringsten Emissionsabgaben aufweist. Lag die Präferenz beispielsweise in der Zeitoptimierung, so kann diejenige Verkehrsroute gewählt werden, welche die schnellste ist, wobei jedoch für jede Verkehrsroute auch die entsprechende Emissionsabgabe mit darstellbar ist. Darüber hinaus lässt sich ein statistischer Vergleich ableiten, beispielsweise in der Art, dass feststellbar ist, wie viel Emissionen pro Zeit abgegeben werden. Auch lassen sich die Emissionsinformationen hinsichtlich der Art des Verkehrsmittels derart skalieren, dass bei Verkehrsmitteln, die naturgemäß zur Beförderung einer Vielzahl von Passagieren ausgelegt sind, die Emissionsinformationen auf die einzelnen Passagiere heruntergebrochen werden.

Anschließend kann der in 2c durchgeführte Vergleich dem Benutzer entsprechend angezeigt werden. So kann das vorgestellte Verfahren beispielsweise in einem mobilen Endgerät 4 (Smartphone) ablaufen, so dass der Benutzer mobilen Zugriff darauf hat. Auf die entsprechenden Fahrplan und Routendienste kann dann das mobile Endgerät 4 via Internet zugreifen. Denkbar ist aber auch, dass sich das mobile Endgerät beim Betreten eines Bahnhofs oder eines Flughafens automatisch mit einem entsprechenden Service verbindet, der dann die gewünschten Informationen bereitstellt.

Denkbar ist aber auch, dass das Verfahren von zu Hause aus von einem festen PC 5 verwendet wird, wobei das Verfahren auf einem entfernten Server oder mit Hilfe einer installierten Software direkt auf dem PC 5 ablaufen kann.

Besonders vorteilhaft ist es, wenn in große Bahnhöfen bzw. Flughäfen die Weiterfahrten an einer Anzeigetafel oder einem entsprechend dafür vorgesehenen Terminal 6 dargestellt werden. Der Zugang zu einem solchen System kann als kostenpflichtiger bzw. kostenfreier Kundenservice über Kundenkarten wie Miles and More oder Bahncard durch Reiseproduktanbieter angeboten werden. Somit kann sich ein Reisender an einem Bahnhof über seine weitere Wegstrecke informieren und entscheiden, ob er das nächste Stück mit dem Auto zurücklegt oder mit der Bahn.

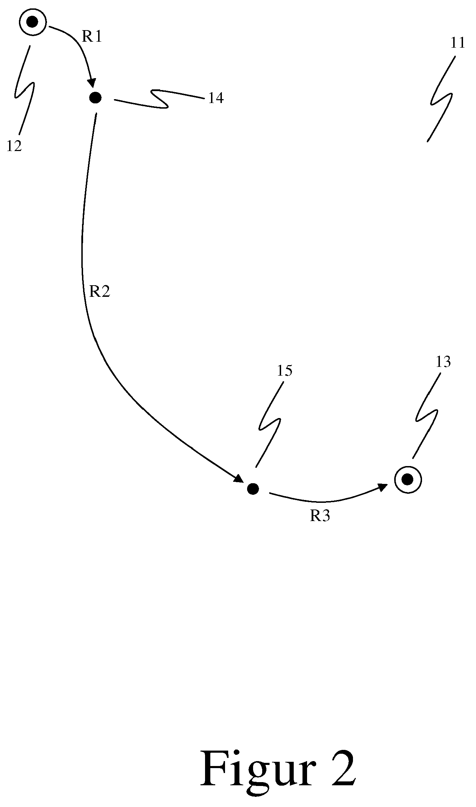

Figur 2 zeigt beispielhaft eine intermodale Verkehrsroute 11 zwischen einem Startpunkt 12 und einem Zielpunkt 13. Der Startpunkt 12 ist beispielsweise der Wohnort des Reisenden in der Innenstadt, beispielsweise München. Der Endpunkt 13 ist das Reiseziel, beispielsweise ein Vorort von Hamburg.

Die Reiseroute kann nunmehr einmal vollständig mit dem Fahrzeug zurückgelegt werden, was an für sich keine intermodale Verkehrsroute darstellt. Denkbar ist aber auch, dass ein Großteil der zurückzulegenden Strecke mit dem Zug oder dem Flugzeug zurückgelegt wird. Dafür muss der Reisende zunächst zu einem entsprechenden Bahnhof oder Flughafen gelangen. Diese diskreten Umsteigepunkte sind mit 14 und 15 gekennzeichnet.

Von dem Startpunkt 12 zum ersten Umsteigepunkt 14 ergibt sich eine erste Route R₁, die beispielsweise mit dem Auto, zu Fuß oder mit öffentlichen Verkehrsmitteln zurückgelegt werden kann. Die zweite Teilroute zwischen den beiden Umsteigepunkten 14 und 15 ist mit R₂ gekennzeichnet und kann je nach Verkehrsmittel mit dem Flugzeug oder der Bahn (im Beispiel von München, Hamburg) absolviert werden. Zum Schluss muss der Reisende vom Umsteigepunkt 15 zu seinem Zielpunkt 13 gelangen, was er wiederum mit Hilfe eines Autos, der Bahn oder öffentlichen Verkehrsmitteln durchführen kann. Die letzte Teilroute ist mit R₃ gekennzeichnet. Für diese Strecke zwischen dem Startpunkt 12 und dem Endpunkt 13 ergeben sich somit unterschiedlichste Verkehrsrouten, je nach dem welche Verkehrsmittel für die einzelnen Verkehrsrouten R₁ bis R₃ gewählt werden. Für jede Teilroute lassen sich dabei hinsichtlich des Verkehrsmittels bestimmte Emissionsinformationen ermitteln. Die gesamte Emissionsinformation der gesamten Strecke 11 ergibt sich dann aus der Summe der einzelnen Emissionsinformationen der Teilrouten R₁ bis R₃.

Der Benutzer hat somit die Möglichkeit zu überprüfen, ob es ökologisch sinnvoll ist, mit den öffentlichen Verkehrsmitteln zu den Umsteigeplätzen 14 und 15 zu kommen, oder ob es sinnvoller ist, mit dem Auto zu fahren oder ähnlichem.

## Patentansprüche

1. Verfahren zur automatischen Unterstützung der Routenplanung zwischen einem Start- und einem Zielpunkt, mit
- Ermitteln für verschiedene Verkehrsmittel jeweils mindestens eine Verkehrsroute zwischen dem Start- und dem Zielpunkt durch eine Verkehrsroutenermittlungseinheit und Zuordnen des mindestens einen Verkehrsmittels zu der jeweiligen Verkehrsroute,
- Ermitteln von Emissionsinformationen durch eine Emissionsermittlungseinheit für jede Verkehrsroute in Abhängigkeit von der ihr zugeordneten Verkehrsmittel und der Verkehrsroutenlänge der jeweiligen Verkehrsroute, und
- Unterstützen der Routenplanung zwischen Start- und Zielpunkt in Abhängigkeit von den Emissionsinformationen,
wobei die Emissionsinformation unter Berücksichtigung von statistischen Durchschnittswerten der Energieverbräuche der einzelnen Verkehrsmittel ermittelt wird, **dadurch gekennzeichnet, dass** unter Berücksichtigung unterschiedlicher Energiebereitstellungsmethoden der Verkehrsmittel ermittelt wird.

2. Verfahren nach Anspruch 1, **dadurch gekennzeichnet, dass** die Verkehrsrouten weiterhin unter Berücksichtigung einer Abfahrts- und/oder Ankunftszeit ermittelt werden.

3. Verfahren nach einem der vorhergehenden Ansprüche, **gekennzeichnet durch** Ermitteln von Zeitinformationen **durch** eine Zeitdauerermittlungseinheit für jede Verkehrsroute in Abhängigkeit von den ihr zugeordneten Verkehrsmittel und der Verkehrsroutenlänge der jeweiligen Verkehrsroute und Unterstützen der Routenplanung weiter in Abhängigkeit von der Zeitinformation.

4. Verfahren nach Anspruch 3, **gekennzeichnet durch** Ermitteln der Zeitinformationen unter Berücksichtigung aktueller Verkehrsinformationen der jeweiligen Verkehrsroute.

5. Verfahren nach einem der vorhergehenden Ansprüche, **dadurch gekennzeichnet, dass** aus einer mit der Verkehrsroutenermittlungseinheit verbundenen Fahrplandatenbank aktuelle Fahrplaninformationen bezüglich fahrplangebundener Verkehrsmittel ermittelt werden und in Abhängigkeit von der aktuellen Fahrplaninformation die Verkehrsroute für das Verkehrsmittel ermittelt wird.

6. Verfahren nach einem der vorhergehenden Ansprüche, **dadurch gekennzeichnet, dass** bei einer aus mehreren Teilrouten bestehenden intermodalen Verkehrsroute den Teilrouten verschiedene Verkehrsmittel zugeordnet werden, wobei dann für jede Teilroute Emissionsinformationen ermittelt werden und die Emissionsinformation der gesamten Verkehrsroute in Abhängigkeit von den Emissionsinformationen der Teilrouten ermittelt wird.

7. Computerprogramm mit Programmcodemitteln, eingerichtet zur Durchführung des Verfahrens nach einem der vorhergehenden Ansprüche, wenn das Computerprogramm auf einer Datenverarbeitungsanlage ausgeführt wird.

8. Vorrichtung zur automatischen Unterstützung der Routenplanung zwischen einem Start- und einem Zielpunkt, eingerichtet zur Durchführung des Verfahrens nach einem der Ansprüche 1 bis 6, wobei die Vorrichtung eine Verkehrsroutenermittlungseinheit hat, die für verschiedene Verkehrsmittel zur Ermittlung jeweils mindestens einer Verkehrsroute zwischen dem Start- und dem Zielpunkt und zum Zuordnen des mindestens einen Verkehrsmittels zu der jeweiligen Verkehrsroute eingerichtet ist, die Vorrichtung eine Emissionsermittlungseinheit hat, die zum Ermitteln von Emissionsinformationen für jede Verkehrsroute in der Abhängigkeit von den ihr zugeordneten Verkehrsmitteln und der Verkehrslänge der jeweiligen Verkehrsroute eingerichtet ist, und wobei die Vorrichtung zur Unterstützung der Routenplanung zwischen Start- und Zielpunkt in Abhängigkeit von den Emissionsinformationen eingerichtet ist.

9. Vorrichtung nach Anspruch 8, **dadurch gekennzeichnet, dass** die Vorrichtung mit einer Fahrplandatenbank zum Ermitteln von aktuellen Fahrplänen fahrplangebundener Verkehrsmittel verbunden ist und/oder zum Ermitteln von aktuellen Verkehrsinformationen bezüglich der Verkehrsrouten eingerichtet ist.

## Claims

1. Method for automatically assisting the route planning between a starting point and a destination, including
- ascertainment of at least one respective traffic route between the starting point and the destination for different means of transport by a traffic route ascertainment unit, and association of the at least one means of transport with the respective traffic route,
- ascertainment of emission information by an emission ascertainment unit for each traffic route on the basis of the means of transport which are associated therewith and on the basis of the traffic route length of the respective traffic route, and
- assistance of the route planning between starting point and destination on the basis of the emission information,
whereby the emission information is ascertained by taking account of statistical average values for the energy consumptions of the individual means of transport, **characterized in that** it is ascertained by taking into account of different methods of energy provision of the individual means of transport.

2. Method according to Claim 1, **characterized in that** the traffic routes are furthermore ascertained by taking account of a departure and/or arrival time.

3. Method according to one of the preceding claims, **characterized by** ascertainment of time information by a time period ascertainment unit for each traffic route on the basis of the means of transport which are associated therewith and on the basis of the traffic route length of the respective traffic route, and assistance of the route planning furthermore on the basis of the time information.

4. Method according to Claim 3, **characterized by** ascertainment of the time information by taking account of current traffic information from the respective traffic route.

5. Method according to one of the preceding claims, **characterized in that** current timetable information for timetable-controlled means of transport is ascertained from a timetable database connected to the traffic route ascertainment unit, and the current timetable information is taken as a basis for ascertaining the traffic route for the means of transport.

6. Method according to one of the preceding claims, **characterized in that** for an intermodal transport route comprising a plurality of sub-routes the sub-routes are allocated different means of transport, whereby emission information are ascertained for each sub-route and the emission information from the entire traffic route is ascertained on the basis of the emission information from the sub-routes.

7. Computer program having program code means, set up to carry out the method according to one of the preceding claims when the computer program is executed on a data processing installation.

8. Apparatus for automatically assisting the route planning between a starting point and a destination, set up to carry out the method according to one of the claims 1 to 6, wherein the apparatus has a traffic route ascertainment unit which is set up to ascertain at least one respective traffic route between the starting point and the destination for different means of transport and to associate the at least one means of transport with the respective traffic route, the apparatus has an emission ascertainment unit which is set up to ascertain emission information for each traffic route on the basis of the means of transport which are associated therewith and on the basis of the traffic length of the respective traffic route, and wherein the apparatus is set up to assist the route planning between starting point and destination on the basis of the emission information.

9. Apparatus according to Claim 8, **characterized in that** the apparatus is connected to a timetable database for ascertaining current timetables for timetable-controlled means of transport and/or is set up to ascertain current traffic information for the traffic routes.

## Revendications

1. Procédé d'assistance automatique à la planification d'itinéraire entre un point de départ et un point d'arrivée, comprenant :
- la détermination pour différents moyens de circulation de chaque fois au moins un axe de circulation entre le point de départ et le point d'arrivée par une unité de détermination d'axes de circulation et l'affectation de l'au moins un moyen de circulation à l'axe de circulation concerné,
- la détermination d'informations sur les émissions par une unité de détermination des émissions pour chaque axe de circulation en fonction des moyens de circulation qui lui sont affectés et de la longueur d'axe de circulation de l'axe de circulation concerné et
- l'assistance à la planification d'itinéraire entre le point de départ et le point d'arrivée en fonction des informations sur les émissions,
les informations sur les émissions étant déterminées en tenant compte de valeurs statistiques moyennes des consommations d'énergie de chaque moyen de circulation, **caractérisé en ce que** le moyen de circulation est déterminé en tenant compte de différentes méthodes de mise à disposition d'énergie.

2. Procédé selon la revendication 1, **caractérisé en ce que** les axes de circulation sont déterminés par ailleurs en tenant compte d'une heure de départ et/ou d'arrivée.

3. Procédé selon l'une quelconque des revendications précédentes, **caractérisé par** une détermination d'informations de temps par une unité de détermination de durée pour chaque axe de circulation, en fonction du moyen de circulation qui lui est affecté et de la longueur d'axe de circulation de l'axe de circulation concerné et par assistance de la planification d'itinéraire par ailleurs en fonction d'informations de temps.

4. Procédé selon la revendication 3, **caractérisé par** une détermination des informations de temps en tenant compte d'informations actuelles sur le trafic sur l'axe de circulation concerné.

5. Procédé selon l'une quelconque des revendications précédentes, **caractérisé en ce qu'**à partir d'une base de données d'itinéraire reliée avec l'unité de détermination d'axes de circulation, des informations actuelles d'itinéraire sont déterminées en ce qui concerne des moyens de circulation programmés et l'axe de circulation pour le moyen de circulation est déterminé en fonction de l'information d'itinéraire actuelle.

6. Procédé selon l'une quelconque des revendications précédentes, **caractérisé en ce que** dans le cas d'un axe de circulation intermodal constitué de plusieurs axes partiels, différents moyens de circulation sont affectés aux axes partiels, pour chaque axe partiel étant alors déterminées des informations sur les émissions et l'information sur les émissions pour l'ensemble de l'axe de circulation étant déterminée en fonction des informations sur les émissions pour les axes partiels.

7. Programme informatique avec des moyens de codes programme, installé pour la réalisation du procédé selon l'une quelconque des revendications précédentes, lorsque le programme informatique est exécuté sur une installation de traitement de données.

8. Dispositif destiné à assister automatiquement la planification d'itinéraire entre un point de départ et un point d'arrivée, installé pour la réalisation du procédé selon l'une quelconque des revendications 1 à 6, le dispositif ayant une unité de détermination des axes de circulation qui est installée pour différents moyens de circulation, pour déterminer chaque fois au moins un axe de circulation entre le point de départ et le point d'arrivée et pour affecter l'au moins un moyen de circulation à l'axe de circulation concerné, le dispositif ayant une unité de détermination d'émission qui est installée pour déterminer des informations sur les émissions pour chaque axe de circulation, en fonction des moyens de circulation qui lui sont affectés et de la longueur de circulation de l'axe de circulation concerné et le dispositif étant installé pour assister la planification d'itinéraire entre le point de départ et le point d'arrivée en fonction des informations sur les émissions.

9. Dispositif selon la revendication 8, **caractérisé en ce que** le dispositif est relié avec une base de données d'itinéraires, pour déterminer des itinéraires actuels pour des moyens de circulation programmés et/ou pour déterminer des informations actuelles sur le trafic en ce qui concerne les axes de circulation.
